# EUROPÄISCHE PATENTANMELDUNG

(11) **EP 0 876 018 A2**
(43) Veröffentlichungstag der Anmeldung: **04.11.1998**
(21) Anmeldenummer: 98101312.1
(22) Anmeldetag: 26.01.1998
(51) Int. Cl.: H04J 14/02

(54) **Verfahren und Anordnung zur Datanübertragung in einem Ringnetz**

(30) Priorität: 21.02.1997 DE 19707056
(71) Anmelder: SIEMENS AKTIENGESELLSCHAFT, 80333 München (DE)
(72) Erfinder: Müller, Horst, 82069 Hohenschäftlarn (DE)

(57) **Zusammenfassung**

Über ein 2-Faser-Ringnetz mit mehreren Netzknoten (A,B,C,D) werden zwischen Terminal-Multiplexern (TM1, TM3) und Add/Drop-Multiplexer (ADM1, ADM2, ADM3, ADM4) bidirektional Working-Signale (WS1W, WS1E) und über den anderen Teil des Ringnetzes bidirektional Protection-Signale (ES3E, ES3W) übertragen. Für jeweils eine Working-Verbindung und eine zugehörige Protection-Verbindung wird nur eine Wellenlänge (λ1) benötigt.

## Beschreibung

Die Erfindung betrifft ein Verfahren zur Datenübertragung in einem Ringnetz und eine hierzu geeignete Anordnung.

Aus dem Tagesbericht des ICC '93 IEEE, 2/1993, Seite 1245 bis 1251 sind optische Kommunikationsnetze mit unterschiedlichen Ringstrukturen bekannt, die Wellenlängenmultiplexverfahren bei der Signalübertragung verwenden. In den Patentanmeldungen DE 43 37 089 A1, E 0651529 A1 und E 0651528 A1 sind optische Ringnetze beschrieben, bei denen die Übertragung ebenfalls im Wellenlängenmultiplexbetrieb erfolgt, wobei einzelne bestimmten Wellenlängen zugeordnete Signale ausgekoppelt und eingekoppelt werden können. Diese Ringnetze können in an sich bekannter Weise außer mit einem sogenannten Arbeitsring auch mit einem Überwachungsring ausgestattet sein.

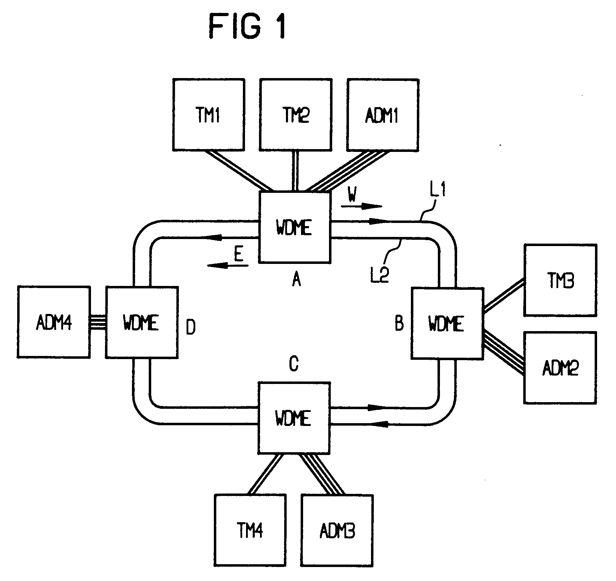

In der 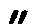 22 European Conference on Optical Communication - ECOC-96 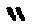 , Oslo, WeB.2.3, page 3.51 to page 3.54 wird in dem Beitrag "First results of an experimental Coloured Section Ring" über eine Ringstruktur berichtet, die in Figur 1 dargestellt ist und einander benachbarte Add/Drop-Multiplexer bidirektional über jeweils zwei Lichtwellenleiter - für jede Übertragungsrichtung ist ein Lichtwellenleiter vorgesehen - miteinander verbindet. Zwischen zwei Add/Drop-Multiplexern wird nur eine einzige Wellenlänge zur Übertragung genutzt, während aber auf allen Übertragungsabschnitten unterschiedlich Wellenlängen genutzt werden.

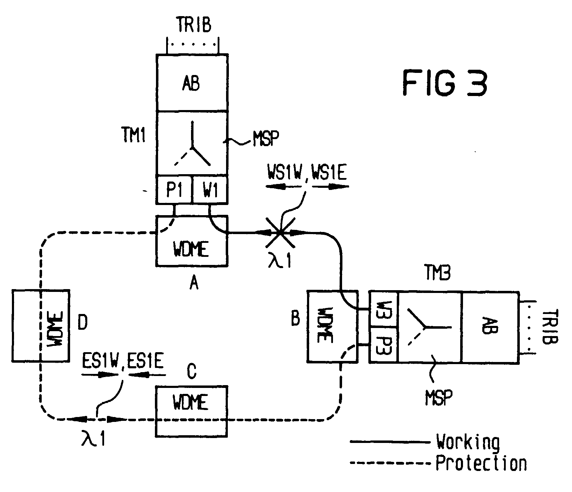

Das Aus- und Einkoppeln von Signalen erfolgt über optische Add/Drop-Multiplexer OADMs, die optischen Filtern entsprechen (Figuren 3, 4 und 5). Diese Struktur wurde für SDH-Verbindungen (Synchrone Digitale Hierarchie) erprobt.

Moderne Datennetze sollen sowohl Punkt-zu-Punkt-Verbindungen von Terminal-Multiplexern ermöglichen als auch den Betrieb von ringförmig miteinander verbundenen Add/Drop-Multiplexern ermöglichen. Eine Ersatzschaltung ist unbedingt erforderlich.

Ferner sollen im Störungsfall möglichst kurze Umschaltzeiten erreicht werden.

Das Problem wird durch ein Verfahren nach Anspruch 1 gelöst.

In einem unahhängigen Anspruch ist eine hierzu geeignete Anordnung angegeben.

Durch die Verwendung des Wellenlängenmultiplexbetriebs können alle Datenverbindungen in einem Ringnetz realisiert werden.

Möglichst kurze Umschaltzeiten werden dadurch erreicht, daß fortwährend Protection-Signale ausgesendet werden, so daß jedes Terminal und jeder Add/Drop-Multiplexer die besseren Signale auswählen kann. Die Koppelfelder in den Add/Drop-Multiplexern bleiben beim Umschalten unverändert.

Ein Ausführungsbeispiel der Erfindung wird anhand von Figuren näher erläutert.

Es zeigen:
- Figur 1: ein 2-Faser-Ringnetz,
- Figur 2: ein Beispiel für Arbeits-Verbindungen zwischen den Terminals und zwischen Add/Drop-Multiplexern,
- Figur 3: die Ersatzschaltung für zwei Terminals bei einem gestörten Streckenabschnitt,
- Figur 4: die Ersatzschaltung zwischen 2 Add/Drop-Multiplexern,
- Figur 5: einen Netzknoten mit einer Wellenlängen-Multiplexeinrichtung, zwei Terminal-Multiplexern und einem Add/Drop-Multiplexer und
- Figur 6: eine Wellenlängen-Multiplexeinrichtung mit Schalteinrichtungen.

In **Figur 1** ist ein mit zwei Lichtwellenleiter L1 und L2 aufgebautes 2-Faser-Ringnetz dargestellt. Die Übertragungsrichtungen sind getrennt, so daß in dem ersten Lichtwellenleiter L1 jeweils in einer ersten Übertragungsrichtung W und in dem zweiten Lichtwellenleiter L2 die Übertragung in der anderen Richtung E erfolgt.

Das Ringnetz enthält vier Netzknoten A, B, C und D mit Terminal-Multiplexer TM und Add/Drop-Multiplexern ADM, die jeweils über eine Wellenlängen-Multiplexeinrichtung WDME mit den Lichtwellenleitern verbunden sind.

Zwischen den Terminal-Multiplexern TM erfolgt ein bidirektionaler Datenaustausch im Punkt-zu-Punkt-Betrieb.

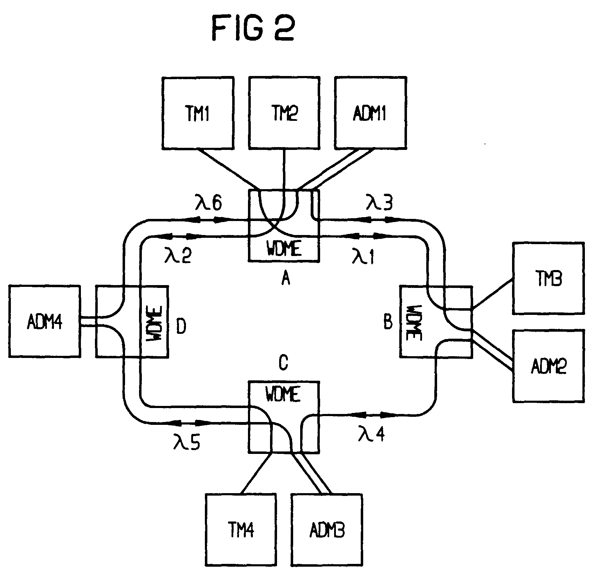

In **Figur 2** sind nur die logischen Verbindungen aus Gründen der Übersichtlichkeit dargestellt. Wie vorstehend bereits beschrieben, erfolgt die Übertragung in jeder Richtung über einen separaten Lichtwellenleiter.

Zur Übertragung jeweils zwischen zwei Terminal-Multiplexern wird auf beiden Lichtwellenleitern dieselbe Wellenlänge verwendet werden. Andere logische Verbindungen von weiteren Terminal-Multiplexern benutzen jeweils eine andere Wellenlänge.

So ist der erste Terminal-Multiplexer TM1 über die Wellenlänge λ1 mit dem Terminal-Multiplexer TM3 verbunden; zwischen beiden Multiplexern werden die Working-Signale (Arbeitssignale) WS1E und WS1W übertragen. Der Terminal-Multiplexer TM2 ist hier über die Wellenlänge λ2 mit dem Terminal-Multiplexer TM4 verbunden usw. Die Übertragung in beiden Richtungen über zwei separate Lichtwellenleiter mit derselben Wellenlänge ist besonders aus organisatorischen Gründen vorteilhaft.

In Figur 2 sind zur Wahrung der Übersichtlichkeit nur die Working-Verbindungen (Arbeitsverbindung) dargestellt. Außerdem gehört zu jeder Working-Verbindung eine Protection-Verbindung (Sicherheits/Ersatz-Verbindung), die mit derselben Wellenlänge jeweils über den anderen Teil des Ringnetzes realisiert ist.

In dem Ringnetz sind auch jeweils die benachbarten Add/Drop-Multiplexer ADM1 und ADM2, ADM2 und ADM3, ADM3 und ADM4 sowie ADM4 und ADM1 über weitere unterschiedliche Wellenlängen λ3 bis λ6 miteinander verbunden. Für jede bidirektionale Verbindung wird vorzugsweise wieder in beiden Übertagungsrichtungen dieselbe Wellenlänge verwendet.

Für den Störungsfall ist ebenfalls für jede Working-Verbindung eine Protection-Verbindungen vorgesehen.

Anhand von **Figur 3** wird dies näher erläutert. Die Working-Verbindung zwischen dem Terminalmultiplexer TM1 und dem Terminalmutliplexer TM3 ist in beiden Richtungen gestört. Zwischen diesen Terminalmultiplexern werden dieselben Daten als Protection-Signale mit derselben Wellenlänge λ1 auch über den ungestörten Teil des Ringnetzes, die gestrichelt dargestellte Protection-Verbindung, übertragen. D. h. die Protection-Signale werden - im Gegensatz zu den Working-Signalen - jeweils in der anderen Übertragungsrichtung ausgesendet und aus der anderen Übertragungsrichtung empfangen. Die Anschlußbaugruppen für die Working-Signale sind mit W und für die Protection-Signale mit P sowie einer Ziffer bezeichnet, die den Multiplexer kennzeichnet.

Um die Umschaltzeiten und damit den Datenverlust möglichst klein zu halten, erfolgt ständig die parallele Datenübertragung über die Protection-Verbindungen, so daß im Störungsfall nur auf die ungestörten Empfangsdaten -die Protection-Signale bzw. auf die besseren Empfangsdaten - umgeschaltet zu werden braucht. Ein aufwendiges Umschalteprotokoll wird überflüssig. Die Überwachungs- und Umschalteinrichtung wird als Multiplex Section Protection MSP bezeichnet.

Ein zyklisches Vertauschen der genutzten Wellenlängen ist möglich. So kann die Verbindung zwischen zwei Multiplexern in jeder Übertragungsrichtung auch mit unterschiedlichen Wellenlängen erfolgen. Bei einem Ringnetz mit zwei logischen Verbindungen zwischen zwei Paaren von Terminal-Multiplexern entsprechend Figur 2 wird dann die Wellenlänge des empfangenen Working-Signals zum Aussenden des Protection-Signals genutzt. Dies bringt aber eher organisatorische Nachteile.

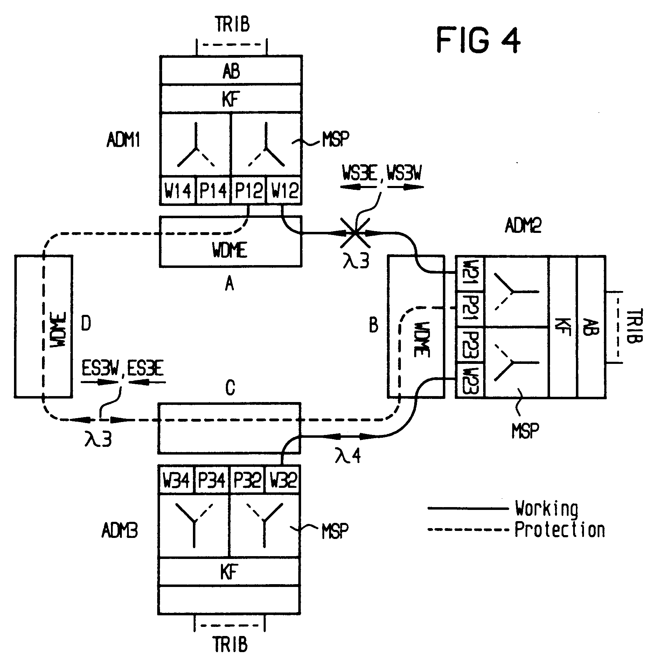

In **Figur 4** wird derselbe Störungsfall für die Add/Drop-Multiplexer erläutert. Die Working-Signale WS3E und WS3W können nicht zwischen den Add/Drop-Multiplexern ADM1 und ADM2 übertragen werden. Die Protection-Verbindung erfolgt über den ungestörten Teil des Ringnetzes über den die Protection-Signale ES3E, ES3W ständig mittels derselben Wellenlänge λ3 übertragen werden, wobei die Protection-Signale ES3E und ES3W durch die Netzknoten C und D geschleift werden.

Das Umschalten zwischen Working-Verbindung und Protection-Verbindung erfolgt wieder aufgrund der Bewertung des Empfangssignals.

Da Daten nur zwischen benachbarten Add/Drop-Multiplexern übertragen werden, ist es auf den unterschiedlichen Streckenabschnitten nicht unbedingt erforderlich, unterschiedliche Wellenlängen zu verwenden. So könnten alle Working-Verbindungen mit der Wellenlänge λ3 erfolgen. Für die Protection Verbindungen sind jedoch ohnehin unterschiedliche Wellenlängen erforderlich, so daß aus organisatorischen Gründen auch hier zur Übertragung der Working- und Protection-Signale jeweils dieselbe Wellenlänge gewählt werden sollte.

Die Add/Drop-Multiplexer weisen zusätzlich ein Koppelfeld KF aus, um die Eingangs- und Ausgangssignale TRIB (Tributary-Signals) beliebig auskoppeln und einfügen zu können bzw. den durchzuschalten

Der Add/Drop-Multiplexer ADM1 ist durch logische Verbindungen über den Add/Drop-Multiplexer ADM2 auch mit dem Add/Drop-Multiplexer ADM3 verbunden. Die Working-Anschlußbaugruppe W12 des Add/Drop-Multiplexers ADM1 ist über die Wellenlänge λ3 mit der Working-Anschlußbaugruppe W21 des Add/Drop-Multiplexers ADM2 verbunden. Im Add/Drop-Multiplexer ADM2 werden nun die Tributary-Signale der Netzknoten A und C im Koppelfeld des Add/Drop-Multiplexers ADM2 von der Working-Anschlußbaugruppe W21 zur Working-Anschlußbaugruppe W23 durchgeschaltet und gelangen mittels der Wellenlänge λ4 zur Working-Anschlußbaugruppe W32 des Add/Drop-Multiplexers ADM3.

Da im Störungsfall - wie bereits beschrieben - lediglich die Umschaltung von der Working-Anschlußbaugruppe W21 auf die Protection-Anschlußbaugruppe P21 durchgeführt wird, wird die Einstellung des Koppelfeldes hiervon nicht betroffen. Die UmSchaltung wird durch das Koppelfeld also nicht verzögert.

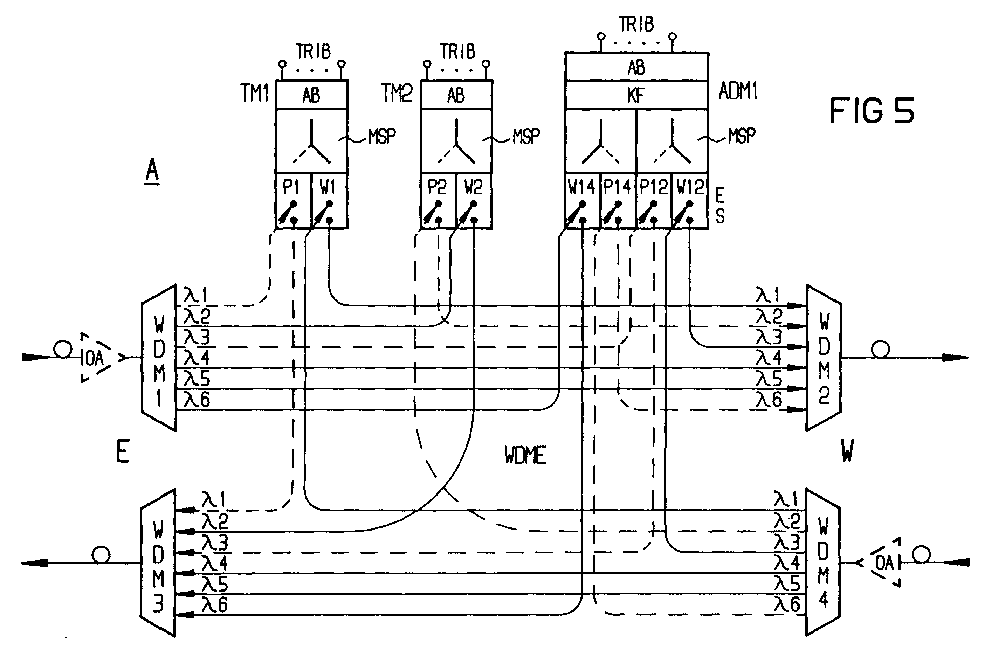

In **Figur 5** ist als Beispiel der Netzknoten A mit seiner Wellenlängen-Multiplexereinheit WDME und seinen Multiplexern TM1, TM2 und ADM1 detailliert dargestellt. Die Wellenlängen-Multiplexereinheit besteht aus aus mehreren Wellenlängen-Multiplexern WDM1 bis WDM4, die optische Filtern zur Selektion oder zum Zusammenfügen von Signalen mit unterschiedlichen Wellenlängen λ1 bis λ6 enthalten.

Nach Figur 2 ist der Terminal-Multiplexer 1 mit dem Terminal-Multiplexer TM3 verbunden. Entsprechend ist der Sendeausgang S der Working-Anschlußbaugruppe W1 mit dem Wellenlängenmultiplexer WDM2 verbunden, über den Daten in der ersten Übertragungsrichtung W mit der Wellenlänge λ1 zum Terminal-Multiplexer TM3 ausgesendet werden, und der Empfangseingang E der Workingbaugruppe W1 mit dem Wellenlängen-multiplexer WDM4 verbunden, der die vom Terminal-Multiplexer TM3 mit der Wellenlänge λ1 ausgesendeten Working-Signale empfängt.

Die Sende- und Empfangsanschlüsse der Protection- Anschlußbaugruppe P1 sind entsprechend mit Ausgängen des Wellenlängenmultiplexers WDM1 bzw. WDM3 verbunden und aus Gründen der Übersichtlichkeit gestrichelt dargestellt.

Entsprechend dem in Figur 2 angegebenen Beispiel sind auch die Anschlüsse der Working- und der Protection-Baugruppe des zweiten Terminal-Mutiplexers TM2 mit den Wellenlängenmultiplexern verbunden, übertragen aber alle Signale mit der Wellenlänge λ2. Die Umschaltung zwischen Protection- und Working-Empfangssignalen erfolgt - wie bereits erwähnt - durch die Überwachungs- und Umschaltbaugruppe MSP. Über Anschlußbaugruppen AB werden die Signale TRIB empfangen oder ausgesendet.

Der Add/Drop-Multiplexer ADM1 ist mit seinen beiden benachbarten Add/Drop-Multiplexern ADM2 und ADM4 verbunden. Er weist daher jeweils zwei Working-Anschußbaugrupppen und zwei Protection-Anschußbaugrupppen und zwei Überwachungs- und Umschalteinrichtungen MSP auf. Die Anschlüsse der Workingbaugruppen W12 und W14 sind entsprechend mit den Wellenlängenmultiplexern WDM2 und WDM4 bzw. WDM1 und WDM3 verbunden. Entsprechend sind die Anschlüsse der Protectionbaugruppen P12 und P14 mit den Wellenlängenmultiplexern des anderen Ringabschnitts verbunden. Selbstverständlich können optische Verstärker OA vorgesehen sein, um die Empfangspegel oder auch Sendepegel anzuheben.

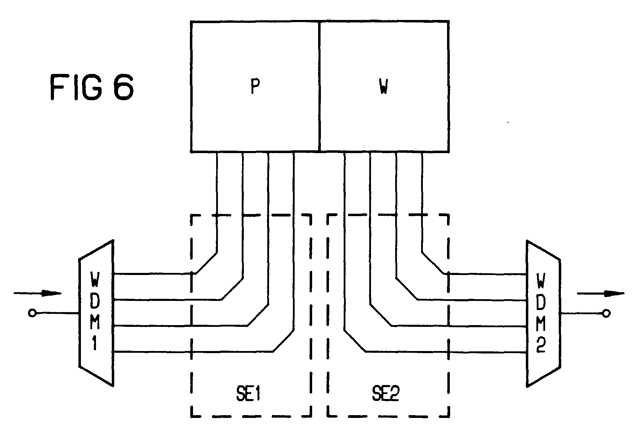

Wie an sich bekannt, müssen die Ausgänge und Eingänge der Wellenlängenmultiplexer nicht fest mit den Working- oder Protection-Baugruppen verbunden sein. Dies kann vielmehr über Schalteinrichtungen SE1 und SE2 erfolgen, wie dies in Figur 6 dargestellt ist. Hierdurch können beliebige Verbindungen zwischen den Multiplexern geschaltet werden, wobei jedoch die Working- und Protection-Anschlußbaugruppen entsprechend ausgebildet sein müssen.

## Patentansprüche

1. Verfahren zur Datenübertragung in einem 2-Faser-Ringnetz mit mehreren Netzknoten (A, B, C, D), die Terminal-Multiplexer (TM1, TM2, TM3, TM4) oder/und Add/Drop-Multiplexer (ADM1, ADM2, ADM3) enthalten,
**dadurch gekennzeichnet,**
daß zwischen jeweils zwei Terminal-Multiplexern (TM1, TM3) verschiedener Netzknoten (A,B) über eine Working-Verbindung über separate Lichtwellenleiter (L1, L2) bidirektional Working-Signale (WS1W, WS1E) übertragen werden,
daß außerdem jeweils über den anderen Teil des Ringnetzes bestehende Protection-Verbindung jeweils zwischen diesen zwei Terminal-Multilexern (TM1, TM3) bidirektional Protection-Signale (ES3E, ES3W) übertragen werden, wobei für jede dieser Protection-Verbindungen zwischen diesen Terminal-Multiplexern (TM1, TM3; TM2, TM4) jeweils eine verschiedene Wellenlänge (λ1; λ2) verwendet wird,
daß zwischen Add-Drop-Multiplexern (ADM1, ADM2; ADM2, ADM3; ADM3, ADM4; ADM4, ADM1) der Netzknoten (A, B, C, D) über Working-Verbindungen bidirektional Working-Signale (WS3W, WS3E; ...) übertragen werden und
daß außerdem jeweils über den anderen Teil des Ringnetzes bestehende Protection-Verbindungen zwischen diesen Add-Drop-Multiplexern (ADM1, ADM2; ADM2, ADM3; ADM3, ADM4; ADM4, ADM1) bidirektional Protection-Signale (ES3E, ES3W; ...) mit weiteren voneinander verschiedenen Wellenlängen (λ3, λ4, λ5, λ6) übertragen werden.

2. Verfahren nach Anspruch 1,
**dadurch gekennzeichnet,**
daß für jede bidirektionale Verbindung zwischen zwei Terminal-Multiplexern (TM1, TM2, ...) oder Add-Drop-Multiplexern (ADM1, ADM2, ...) jeweils die Übertragung der Working-Signale (WS1W, WS1E; ) und der zugehörigen Protection-Signale (ES1W, ES1E; ES3E, ES3W; ...) mit derselben Wellenlänge(λ1; λ3) über die Lichtwellenleiter (L1, L2).erfolgt.

3. Verfahren nach Anspruch 1,
**dadurch gekennzeichnet,**
daß über Wellenlängenmultiplexeinrichtung (WDM) und Schalteinrichtungen (SE1, SE2) den Anschlußbaugruppen der Multiplexer (TM1, ADM1, ...) unterschiedliche Wellenlängen zugeführt werden und/oder von den Anschlußbaugruppen ( ) in das Ringnetz eingespeist werden.

4. Verfahren nach einem der vorhergehenden Ansprüche,
**dadurch gekennzeichnet,**
daß in jedem Multiplexer (TM1, ADM1, ...) Überwachungs- und Kontrollbaugruppen (MSP) bei einem gestörten Arbeitssignal (WS1E, WS1W) eine Umschaltung auf das Protection-Signal (ES1E, ES1W) durchführen bzw. das bessere Empfangssignal auswählen.

5. Anordnung zur Datenübertragung in einem 2-Faser-Ringnetz mit mehreren Netzknoten (A,B,C,D), das für jede Übertragungsrichtung einen separaten Lichtwellenleiter verwendet,
bei der die Netzknoten (A,B,C,D) Terminal-Multiplexer (TM1, TM2, TM3, TM4) und/oder Add/Drop-Multiplexer (ADM1, ADM2; ADM2, ADM3; ADM3, ADM4; ADM4, ADM1) enthalten,
bei der in jedem Netzknoten (A,B,C,D) eine Wellenlängen-Multiplexereinheit (WDME) zum Aus- und Einkoppeln von Signalen mit bestimmten Wellenlängen vorgesehen ist,
bei der Working-Anschlußbaugruppen (W1,W2) von jeweils zwei Terminal-Multiplexern (TM1, TM2) über eine bidirektionale Punkt-zu-Punkt-Verbindung über beide Lichtwellenleiter (L1, L2) verbunden sind,
bei der Protection-Anschlußbaugruppen (P1, P3) dieser Terminal-Multiplexer (TM1, TM3) über den anderen Teil des Ringnetzes miteinander verbunden sind,
bei der jeder Add/Drop-Multiplexer (ADM1) über jeweils eine Working-Anschlußbaugruppen (W12, ...) mit Working-Anschlußbaugruppe (W21, W34) der benachbarten Add/Drop-Multiplexer (ADM2, ADM4) der Netzknoten (B, D) verbunden sind und
bei der die Protection-Anschlußbaugruppen (P12, P14) dieses Add/Drop-Multiplexer (ADM1) über den anderen Teil des Ringnetzes mit dem Protection-Anschlußbaugruppen (P21, ...) dieser Add/Drop-Multiplexer (ADM2, ADM4) verbunden sind.

6. Anordnung nach Anspruch 5,
**dadurch gekennzeichnet,**
daß jede Working-Anschlußbaugruppe (W1, ...) und die zugehörigen Protection-Anschlußbaugruppe (P1, ...) zur Aussendung und zum Empfang von Signalen mit derselben Wellenlänge (λ1, ...) ausgebildet ist.

7. Anordnung nach Anspruch 5,
**dadurch gekennzeichnet,**
daß in der Multiplexereinheit (WDME) Schalteinrichtungen (SE1, SE2) vorgesehen sind mit denen Signale mit einer bestimmten Wellenlänge (λ1) ausgewählt und eingefügt werden können.

8. Anordnung nach Anspruch 1 oder 2,
**dadurch gekennzeichnet,**
daß in den Add/Drop-Multiplexern (ADM1, ...) Koppelfelder (KF) vorgesehen sind, die Signale auskoppeln, einfügen oder durchschalten.
